# EUROPEAN PATENT SPECIFICATION

(11) **EP 3 711 996 B1**
(45) Date of publication and mention of the grant of the patent: **04.10.2023**
(21) Application number: 17932226.8
(22) Date of filing: 15.11.2017
(51) Int. Cl.: B60K 11/02, B60K 1/00, B60K 11/04

(54) **COOLING SYSTEM AND METHOD FOR MOTOR AND CONTROLLER**
KÜHLSYSTEM UND VERFAHREN FÜR MOTOR UND STEUERUNG
SYSTÈME ET PROCÉDÉ DE REFROIDISSEMENT POUR MOTEUR ET DISPOSITIF DE COMMANDE

(43) Date of publication of application: 23.09.2020
(73) Proprietor: Hunan CRRC Times Electric Vehicle Co., Ltd, Zhuzhou, Hunan 412007 (CN)
(72) Inventor: TANG, Mingzhong, Zhuzhou Hunan 412007 (CN); CHEN, Huangxi, Zhuzhou Hunan 412007 (CN); ZHOU, Hongtao, Zhuzhou Hunan 412007 (CN); LI, Shuping, Zhuzhou Hunan 412007 (CN); ZHANG, Chen, Zhuzhou Hunan 412007 (CN); ZHANG, Yanbin, Zhuzhou Hunan 412007 (CN); WANG, Wen, Zhuzhou Hunan 412007 (CN); YAN, Dong, Zhuzhou Hunan 412007 (CN); LONG, Aijun, Zhuzhou Hunan 412007 (CN); ZHOU, Yu, Zhuzhou Hunan 412007 (CN); MA, Xiangsheng, Zhuzhou Hunan 412007 (CN)
(74) Representative: Laine IP Oy
(86) International application number: PCT/CN2017/111030
(87) International publication number: WO 2019/095129

(56) References cited:
- EP-A2- 1 604 857
- EP-B1- 1 604 857
- CN-A- 102 700 400
- CN-A- 102 765 321
- CN-U- 201 824 863
- CN-U- 203 752 889
- CN-U- 203 962 456
- CN-U- 204 451 998
- CN-U- 204 734 432
- CN-U- 205 951 698
- JP-A- 2011 225 134
- JP-A- 2014 206 301
- US-A1- 2013 264 025
- US-A1- 2017 144 532

## Description

### Technical Field

The present invention relates to the field of cooling technology for a vehicle drive system, particularly to a cooling system for motor and controller, and a method thereof.

### Technical Background

At present, there are mainly two traditional cooling arrangements for electric drive systems in vehicles. In the first arrangement, a generator and a drive motor are arranged in series, while a generator controller and a drive motor controller are also arranged in series, thus forming two independent cooling systems, respectively. However, this arrangement has a disadvantage of requiring a large amount of space. In addition, each cooling system needs one water pump, one heat radiator, and one or more electronic fans for heat extraction and dissipation, so that the production cost is relatively high. In the second arrangement, the generator, the drive motor and respective controllers are arranged in series to form one single cooling system, which uses one water pump, one heat radiator, and one or more electronic fans for heat extraction and dissipation. However, this type of cooling system suffers from large internal resistances of the generator controller and the drive motor controller. In addition, since there is only one water pump to supply circulating water to the cooling system, the water flow is not sufficient to meet the requirements on heat dissipation for the controllers, the generator, and the drive motor when they are operated under high temperature.

In addition, in the vehicle electric drive cooling system, a cover of the electronic fan is arranged on the heat radiator. Therefore, a gap formed between the cover of the electronic fan and a core body of the heat radiator has an important influence on the cooling effect of the heat radiator and the service life of the electronic fan. Currently, the gap between the cover of the electronic fan and the core body of the heat radiator is often relatively large. On the one hand, this causes hot air reflow or air leakage, thus reducing the cooling effect of the heat radiator. On the other hand, when the heat radiator is arranged at a relatively low position, sand or debris on the ground will be easily sucked into the cover of the electronic fan, either being adhered to blades of the electronic fan or entering interior space of a motor of the electronic fan. This will cause early wear of bearings of the electronic fan, resulting in unbalanced movement of the fan blades. Thus excessive impact will be exerted on the heat radiator, which can easily cause the heat radiator to crack, leading to water leakage. If the gap between the cover of the electronic fan and the core body of the heat radiator is too small, the cover of the electronic fan will often crush the core body of the heat radiator due to manufacturing errors, causing water leakage in the heat radiator.

In current vehicle electric drive cooling systems, a temperature sensor is generally provided at a water inlet/outlet of the heat radiator to detect water temperature at the water inlet/outlet of the heat radiator, by which the electronic fan is turned on or off to dissipate heat from components of the electric drive cooling system. The disadvantage thereof is that the water temperature is always lagging compared to temperatures of stator coils of the generator and the drive motor, and of IGBTs of the generator controller and the drive motor controller, and there will be a temperature difference therebetween. This temperature difference will be varied with the driving conditions of the vehicle, and thus is difficult to be determined accurately in the control algorithm. Therefore, in the actual driving of the vehicle, there exists a situation that the water temperature is not high while the stator coils of the generator and the drive motor and the IGBTs of the generator controller and the drive motor controller are of high temperature so that power restriction has been already performed, which will affect the normal driving of the vehicle.

Cooling systems are e.g. known from CN 203 752 889 U, US 2017/144532 A1, JP 2011 225134 A and CN 204 451 998 U.

### Summary of the Invention

Aiming to solve the above technical problems, the present invention proposes a cooling system for motor and controller, wherein only one cooling system is used, with which the flow and cooling requirements of the integrated controller and the generator and those of the drive motor can be both met.

According to an aspect of the present invention, a cooling system for motor and controller as defined in claim 1 is proposed. It includes:
a cooling package; a circulation loop having two ends respectively connected with a high-level port and a low-level port of the cooling package, the circulation loop including a water pump arranged in series therein, and a first branch and a second branch connected in parallel with each other; and an expansion water tank connecting the cooling package and the circulation loop. The first branch includes an integrated controller and a generator arranged in series, the integrated controller being located before the generator, and the second branch includes a drive motor.

The cooling package includes a heat radiator, a shroud disposed on the heat radiator, and an electronic fan arranged in the shroud, the heat radiator and the shroud being connected with each other through a sealing assembly.

The sealing assembly includes a ferrule arranged around an edge of the shroud and an elastic boss provided on the ferrule, the elastic boss being pressed by the heat radiator so that it is in a compressed state.

According to a further improvement of the present invention, the ferrule is provided with a clamping slot having a U-shaped cross section, in which a plurality of barbs is provided to catch the edge of the shroud.

According to a further improvement of the present invention, upper and lower edges of the shroud are respectively provided with a plurality of connecting tabs, each having a U-shaped hole therein, and a bent edge is provided on each side of the shroud, and has a width equal to a depth of the clamping slot.

According to a further improvement of the present invention, the second branch is provided with two butterfly handle ball valves, which are respectively arranged at a water inlet and a water outlet of the integrated controller.

According to a further improvement of the present invention, the heat radiator is provided at its top with a first exhaust valve connected to the expansion water tank, and a water outlet of the drive motor in the second branch is provided with a second exhaust valve connected to the expansion water tank.

According to a further improvement of the present invention, the integrated controller is integrated with a generator controller for controlling operation of the generator, a drive motor controller for controlling operation of the drive motor, and a vehicle controller for controlling the water pump and the cooling package.

According to a further improvement of the present invention, a generator temperature sensor is provided adjacent to a water outlet of the generator for detecting a stator coil temperature of the generator, a drive motor temperature sensor is provided adjacent to a water outlet of the drive motor for detecting a stator coil temperature of the drive motor, a generator controller temperature sensor is provided adjacent to a water outlet of the generator controller for detecting an IGBT temperature of the generator controller, and a drive motor controller temperature sensor is provided adjacent to a water outlet of the drive motor controller pump for detecting an IGBT temperature of the drive motor controller. The drive motor temperature sensor and the drive motor controller temperature sensor are connected to the drive motor controller, and the generator temperature sensor and the generator controller temperature sensor are connected to the generator controller.

According to another aspect of the present invention, a cooling method for motor and controller as defined in claim 8 is proposed, including step 1 of mounting the cooling system for motor and controller according to any one of claims 1 to 7 on a vehicle, and step 2, wherein:
several predetermined turn-on temperatures are set for the water pump, corresponding to the temperatures of the drive motor, the drive motor controller, the generator and the generator controller, respectively, and when any one of the actual temperatures is higher than a respective predetermined turn-on temperature of the water pump, the water pump is turned on; several predetermined turn-off temperatures are set for the water pump, corresponding to the temperatures of the drive motor, the drive motor controller, the generator and the generator controller, respectively, and when all of the actual temperatures are lower than a respective predetermined turn-off temperature of the water pump, the water pump is turned off; several predetermined turn-on temperatures are set for the electronic fan, corresponding to the temperatures of the drive motor, the drive motor controller, the generator and the generator controller, respectively, and when any one of the actual temperatures is higher than a respective predetermined turn-on temperature of the electronic fan, the electronic fan is turned on; and several predetermined turn-off temperatures are set for the electronic fan, corresponding to the temperatures of the drive motor, the drive motor controller, the generator and the generator controller, respectively, and when all of the actual temperatures are lower than a respective predetermined turn-off temperature of the electronic fan, the electronic fan is turned off.

Compared with the prior arts, the present invention has the following advantages.

In the cooling system for motor and controller according to the present invention, the integrated controller and the generator are connected in series to form the first branch. Since the temperature at the water inlet of the integrated controller should be lower than that at the water inlet of the generator, the integrated controller should be located before the generator. The first branch is, in turn, connected in parallel with the second branch, which is provided therein with the drive motor, so that the motor cooling system and the controller cooling system are incorporated into one single cooling system. On the one hand, the total amount of the heat generated by the integrated controller and that generated by the generator is equivalent to the heat generated by the drive motor. On the other hand, the minimum cross-sectional area of the first branch formed by the integrated controller and the generator corresponds to that of the drive motor. In addition, through the parallel connection in this embodiment, the flow of water to the heat radiator in the system can be maximized, thereby improving the heat dissipation effect of the heat radiator. Therefore, when the integrated controller and the generator are connected in series to form a branch, which is, in turn, connected to the drive motor in parallel, thus-formed pipeline arrangement has a small internal resistance, which increases the total flow of the cooling system. Therefore, not only the flow and cooling requirements of the integrated controller and the generator, but also the flow and cooling requirements of the drive motor can be met by the flow of the system. In this way, only one cooling package with a relatively large area for heat dissipation is used for heat dissipation, so that the pipeline layout is simplified, and the space required by the arrangement is reduced. Accordingly, not only the production cost is reduced, but also the integrated controller, the generator, and the drive motor are all in a state of good heat dissipation.

In the cooling system for motor and controller according to the present invention, the sealing assembly is arranged between the shroud and the heat radiator. The seal assembly can be deformed by being pressed by the horizontal and vertical boundaries of the heat radiator through the elastic boss, thereby sealing the gap between the shroud and the heat radiator. If a certain amount of dust or debris is accumulated in the internal space of the heat radiator and the shroud after a long time, the dust or debris can be easily cleaned by squeezing the elastic boss to the maximum extent.

In the cooling system for motor and controller according to the present invention, two butterfly handle ball valves are respectively arranged at the water inlet and the water outlet of the integrated controller. In this manner, when the integrated controller is damaged and needs to be replaced, it is not necessary to drain out antifreeze in the cooling system. By turning off the butterfly handle ball valves merely, the controller can be removed and replaced, which improves the replacement efficiency and reduces the loss of antifreeze.

### Brief Description of the Drawings

Fig. 1 schematically shows the structure of a cooling system for motor and controller according to an embodiment of the present invention, illustrating the connection of pipelines;
Fig. 2 is a front view of a cooling package according to an embodiment of the present invention;
Fig. 3 is a top view of the cooling package according to an embodiment of the present invention;
Fig. 4 is a left side view of the cooling package according to an embodiment of the present invention;
Fig. 5 is an enlarged view of area A in Fig. 3, showing a top view of the connection structure of a sealing assembly;
Fig. 6 is an enlarged view of area B in FIG. 4, showing a side view of the connection structure of the sealing assembly;
Fig. 7 schematically shows the structure of a ferrule according to an embodiment of the present invention;
Fig. 8 schematically shows the structure of a shroud according to an embodiment of the present invention; and
Fig. 9 is a schematic diagram showing the electrical control principle of a cooling system for motor and controller according to an embodiment of the present invention.

In the drawings, the same reference numerals indicate the same components, respectively. The drawings are not drawn to actual scale.

List of reference numerals
- 1: cooling package
- 2: circulation loop
- 3: water pump
- 4: first branch
- 5: second branch
- 6: expansion water tank
- 11: heat radiator
- 12: shroud
- 13: electronic fan
- 14: sealing assembly
- 15: ferrule
- 16: elastic boss
- 17: clamping slot
- 18: barb
- 19: connecting tab
- 20: bent edge
- 31: drive motor
- 32: integrated controller
- 33: generator
- 34: butterfly handle ball valve

### Detailed Description of the Invention

In the following the present invention will be further described with reference to the accompanying drawings.

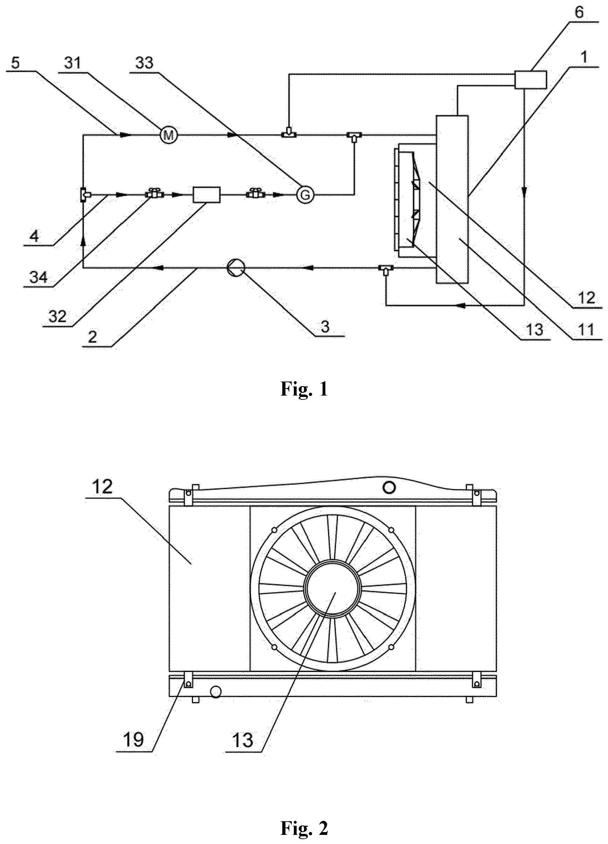

Fig. 1 schematically shows a cooling system for motor and controller according to an embodiment of the present invention. According to the cooling system for motor and controller of the present invention, only one cooling system is used, with which the flow and cooling requirements of the integrated controller and the generator and those of the drive motor can be both met.

As shown in Fig. 1, the cooling system for motor and controller according to this embodiment includes a cooling package 1, which is used for achieving temperature reduction and cooling effect. The system of this embodiment further includes a circulation loop 2, two ends of which are respectively connected to a high-level port and a low-level port of the cooling package 1. The circulation loop 2 includes a water pump 3 arranged in series, and a first branch 4 and a second branch 5 that are arranged in parallel with each other. Among others, the first branch 4 is provided therein with an integrated controller 32 and a generator 33. Since the temperature at a water inlet of the integrated controller should be lower than that at a water inlet of the generator, the integrated controller must be located before the generator, that is, at an upstream position along a flow line of the cooling water. A drive motor 31 is provided in the second branch 5. In addition, the system of this embodiment further includes an expansion water tank 6, which connects the cooling package 1 with the circulation loop 2.

In the cooling system for motor and controller according to this embodiment, the integrated controller 32 and the generator 33 are connected in series to form the first branch 4, which is, in turn, connected in parallel with the second branch 5, which is provided therein with the drive motor 31, so that the motor cooling system and the controller cooling system are incorporated into one single cooling system. On the one hand, the total amount of the heat generated by the integrated controller 32 and that generated by the generator 33 is equivalent to the heat generated by the drive motor 31. On the other hand, the minimum cross-sectional area of the first branch formed by the integrated controller 32 and the generator 33 corresponds to that of the drive motor 31. In addition, through the parallel connection in this embodiment, the flow of water to the heat radiator 11 in the system can be maximized, thereby improving the heat dissipation effect of the heat radiator. Therefore, when the integrated controller 32 and the generator 33 are connected in series to form a branch, which is, in turn, connected to the drive motor 31 in parallel, thus-formed pipeline arrangement has a small internal resistance, which increases the total flow of the cooling system. Therefore, not only the flow and cooling requirements of the integrated controller 32 and the generator 33, but also the flow and cooling requirements of the drive motor 31 can be met by the flow of the system. In this way, only one cooling package 1 with a relatively large area for heat dissipation is used for heat dissipation, so that the pipeline layout is simplified, and the space required by the arrangement is reduced. Accordingly, not only the production cost is reduced, but also the integrated controller 32, the generator 33, and the drive motor 31 are all in a state of good heat dissipation.

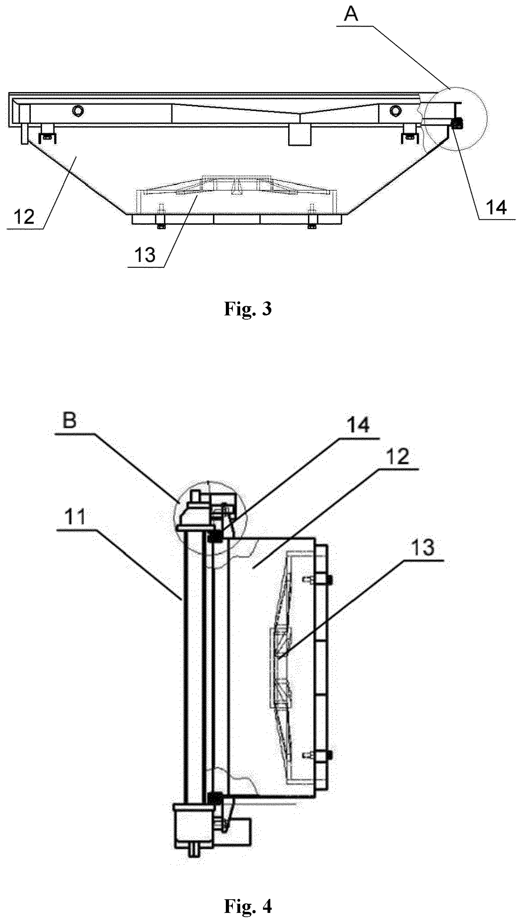

In one embodiment, as shown in Figs. 2, 3 and 4, the cooling package 1 includes a heat radiator 11, a shroud 12 disposed on the heat radiator 11, and an electronic fan 13 arranged in the shroud 12. The heat radiator 11 and the shroud 12 are connected with each other through a sealing assembly 14.

When the system according to this embodiment is used, a gap formed between the shroud 12 and a core body of the heat radiator 11 has an important influence on the cooling effect of the heat radiator 11 and the service life of the electronic fan 13. If the gap formed between the shroud 12 and the core body of the heat radiator 11 is excessively large, it would, on the one hand, cause hot air reflow or air leakage, thus reducing the cooling effect of the heat radiator 11. On the other hand, when the heat radiator 11 is arranged at a relatively low position, sand or debris on the ground will be easily sucked into a cover of the electronic fan 13, either being adhered to blades of the electronic fan 13 or entering interior space of a motor of the electronic fan 13. This will cause early wear of bearings of the electronic fan 13, resulting in unbalanced movement of the blades of the electronic fan 13. Thus excessive impact will be exerted on the heat radiator 11, which can easily cause the heat radiator 11 to crack, leading to water leakage. If the gap between the shroud 12 and the core body of the heat radiator 11 is too small, the cover of the electronic fan 13 will often crush the core body of the heat radiator 11 due to manufacturing errors, causing water leakage in the heat radiator 11.

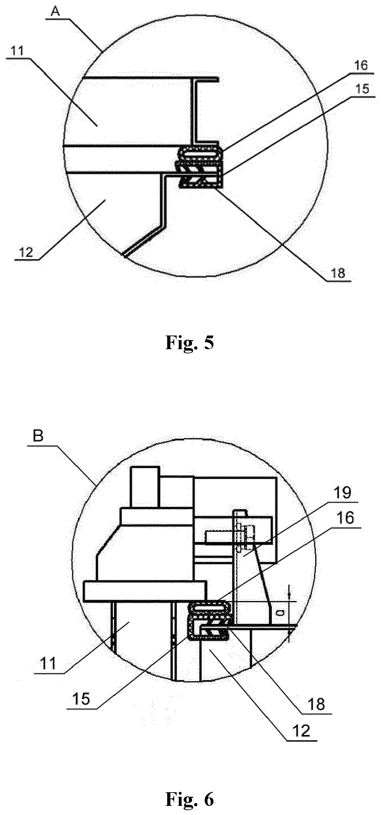

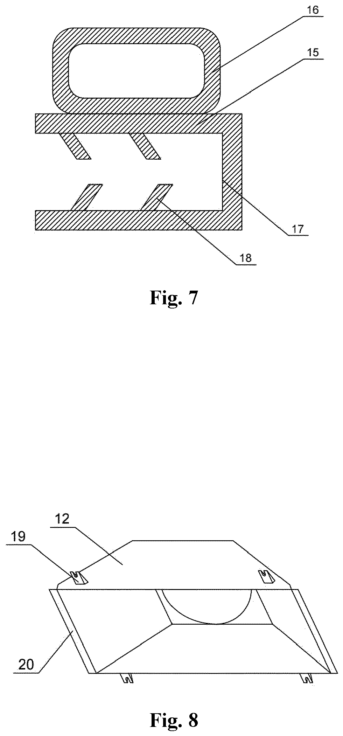

In one embodiment, as shown in Figs. 5 and 6, the sealing assembly 14 includes a ferrule 15, which is arranged around an edge of the sealing assembly 14. In this embodiment, the ferrule 15 has a shape of an elongated strip, and is provided with a clamping slot 17 (as shown in Fig. 7). The clamping slot 17 has a U-shaped cross section. An elastic boss 16 arranged on the ferrule 15 is pressed by the heat radiator 11, so that the elastic boss 16 is in a compressed state.

When the system according to this embodiment is used, the seal assembly 14 is deformed by being pressed by the horizontal and vertical boundaries of the heat radiator 11 through the elastic boss 16, thereby sealing the gap between the shroud 12 and the heat radiator 11. If a certain amount of dust or debris is accumulated in the internal space of the heat radiator 11 and the shroud 12 after a long time, the dust or debris can be easily cleaned by squeezing the elastic boss 16 to the maximum extent.

In a preferred embodiment, the ferrule 15 is provided with a plurality of barbs 18, which can catch the edge of the shroud 12. The barbs 18 can firmly clamp the edge of the shroud 12 to prevent it from falling off, so that the connection between the ferrule 15 and the shroud 12 is more stable.

In one embodiment, as shown in Fig. 8, the upper and lower edges of the shroud 12 are respectively provided with a plurality of connecting tabs 19, each having a U-shaped hole therein. A bent edge 20 is provided on each side of the shroud 12, and the length of the bent edge 20 is equivalent to that of the ferrule 15. In a preferred embodiment, if the gap between the shroud 12 and the vertical boundary of the core of the heat radiator 11 is *a* (which is about 10 mm), the gap between the shroud 12 and the horizontal boundary of the core of the heat radiator 11 is *b* (which is about 10 mm), and the diameter of the elastic boss 16 is *c* (which is about 20-25 mm), it requires c/3 ≤ *a* ≤ *c*/*2* and c/3 ≤ *b* ≤ *c*/2*.* In this way, it can be ensured that the gap between the shroud 12 and the heat radiator 11 could be better sealed, and meanwhile the elastic boss 16 is prevented from being squeezed too much to be damaged.

In one embodiment, the second branch 5 is provided with two butterfly handle ball valves 34, which are respectively arranged at a water inlet and a water outlet of the integrated controller 32. The controller is a fragile component. In the after-sales maintenance procedure, it is easy to cause the loss of antifreeze, which is relatively expensive so that the cost of after-sales maintenance will be inevitably increased. Therefore, a butterfly handle ball valve 34 is provided at each of the water inlet and the water outlet of the integrated controller 32. When the integrated controller 32 is damaged and needs to be replaced, it is not necessary to drain out the antifreeze of the cooling system. By turning off the butterfly handle ball valves 34 merely, the controller can be removed and replaced, which improves the replacement efficiency, reduces the loss of antifreeze, and saves the cost of after-sales service.

In one embodiment, the heat radiator 11 is provided at its top with a first exhaust valve connected to the expansion water tank 6, and a water outlet of the drive motor 31 of the second branch 5 is provided with a second exhaust valve connected to the expansion water tank 6. Therefore, gas in the coolant circulation loop 2 can be discharged into the expansion water tank 6 through the first exhaust valve and the second exhaust valve.

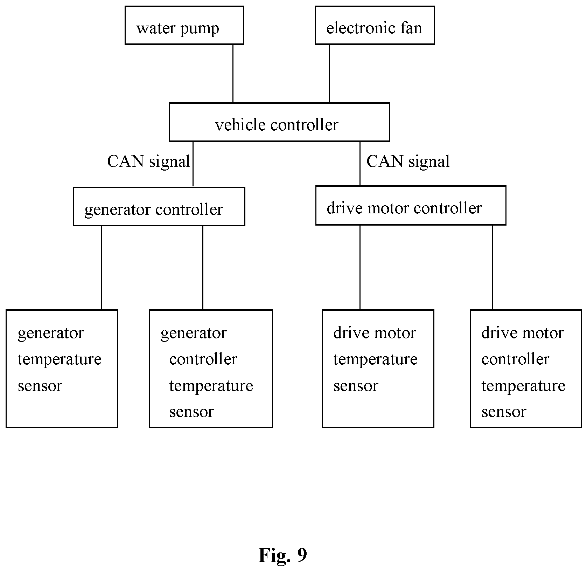

In one embodiment, as shown in Fig. 9, a generator controller, a drive motor controller and a vehicle controller are integrated into the integrated controller. Among others, the generator controller is used to control the operation of the generator, the drive motor controller is used to control the operation of the drive motor, and the vehicle controller is used to control the operation of the water pump and the cooling package. In this embodiment, the generator controller is connected to a generator temperature sensor and a generator controller temperature sensor, which are respectively used to detect the temperature of a stator coil of the generator and the temperature of an IGBT of the generator controller. The hard-wire signals of the detected temperatures of the stator coil of the generator and the IGBT of the generator controller are converted into CAN signals by the generator controller. The drive motor controller is connected to a drive motor temperature sensor and a drive motor controller temperature sensor, which are respectively used to detect the temperature of a stator coil of the drive motor and the temperature of an IGBT of the drive motor controller. The hard-wire signals of the detected temperatures of the stator coil of the drive motor and the IGBT of the drive motor controller are converted into CAN signals by the drive motor controller.

When the system according to this embodiment is used, the temperatures collected by the generator temperature sensor and the generator controller temperature sensor are sent to the vehicle controller in the form of CAN signals through the generator controller. The temperatures collected by the drive motor temperature sensor and the drive motor controller temperature sensor are sent to the vehicle controller in the form of CAN signals through the drive motor controller. The vehicle controller outputs control commands based on the CAN signals received, so as to control the water pump and the electronic fan to be turned on or off.

In a preferred embodiment, the generator temperature sensor is disposed adjacent to the water outlet of the generator, the generator controller temperature sensor is disposed adjacent to the water outlet of the generator controller, the drive motor temperature sensor is disposed adjacent to the water outlet of the drive motor 31, and the drive motor controller temperature sensor is disposed adjacent to the water outlet of the drive motor controller.

In traditional temperature measurement methods, the temperature sensors are in contact with the water of the cooling system, so that it is the temperature of the water, instead of those of the stator coil of the generator 33, the stator coil of the drive motor 31 and the IGBTs of the controllers, that is measured. However, there is a temperature difference between the temperature of the water and those of the generator, the drive motor 31, and the controllers. In addition, the measurement of water temperature is always lagging. Accordingly, it is very likely that the water temperature does not exceed an upper limit, but the temperatures of the generator 33, the drive motor 31 and the controller 32 have exceeded said upper limit already. This will inevitably cause the vehicle to restrict power, and thus affect the normal driving of the vehicle. With the system of this embodiment, temperatures of individual components can be accurately measured.

According to another aspect of the present invention, a cooling method for motor and controller is provided, including the following steps.

In step 1, the cooling system for motor and controller as mentioned above is mounted on a vehicle.

In step 2, wherein: several predetermined turn-on temperatures are set for the water pump, corresponding to the temperatures of the drive motor, the drive motor controller, the generator and the generator controller, respectively, and when any one of the actual temperatures is higher than a respective predetermined turn-on temperature of the water pump, the water pump is turned on; several predetermined turn-off temperatures are set for the water pump, corresponding to the temperatures of the drive motor, the drive motor controller, the generator and the generator controller, respectively, and when all of the actual temperatures are lower than a respective predetermined turn-off temperature of the water pump, the water pump is turned off; several predetermined turn-on temperatures are set for the electronic fan, corresponding to the temperatures of the drive motor, the drive motor controller, the generator and the generator controller, respectively, and when any one of the actual temperatures is higher than a respective predetermined turn-on temperature of the electronic fan, the electronic fan is turned on; and several predetermined turn-off temperatures are set for the electronic fan, corresponding to the temperatures of the drive motor, the drive motor controller, the generator and the generator controller, respectively, and when all of the actual temperatures are lower than a respective predetermined turn-off temperature of the electronic fan, the electronic fan is turned off.

In a preferred embodiment, the water pump is turned on or off in a manner as follows.

The predetermined turn-on temperature of the water pump corresponding to the temperature of the drive motor controller is 45°C, the predetermined turn-on temperature of the water pump corresponding to the temperature of the drive motor is 60°C, the predetermined turn-on temperature of the water pump corresponding to the temperature of the generator controller is 45°C, and the predetermined turn-on temperature of the water pump corresponding to the temperature of the generator is 60°C. The water pump is turned on when the actual temperature of any one of the drive motor controller, the drive motor, the generator and the generator controller is higher than a corresponding predetermined turn-on temperature of the water pump.

The predetermined turn-off temperature of the water pump corresponding to the temperature of the drive motor controller is 40°C, the predetermined turn-off temperature of the water pump corresponding to the temperature of the drive motor is 55°C, the predetermined turn-off temperature of the water pump corresponding to the temperature of the generator controller is 40°C, and the predetermined turn-off temperature of the water pump corresponding to the temperature of the generator is 55°C. The water pump is turned off when all of the actual temperatures of the drive motor controller, the drive motor, the generator and the generator controller are lower than a corresponding predetermined turn-off temperature of the water pump.

In a preferred embodiment, the electronic fan is turned on or off in a manner as follows.

The predetermined turn-on temperature of the electronic fan corresponding to the temperature of the drive motor controller is 58°C, the predetermined turn-on temperature of the electronic fan corresponding to the temperature of the drive motor is 95°C, the predetermined turn-on temperature of the electronic fan corresponding to the temperature of the generator controller is 58°C, and the predetermined turn-on temperature of the electronic fan corresponding to the temperature of the generator is 95°C. The electronic fan is turned on when the actual temperature of any one of the drive motor controller, the drive motor, the generator and the generator controller is higher than a corresponding predetermined turn-on temperature of the electronic fan.

The predetermined turn-off temperature of the electronic fan corresponding to the temperature of the drive motor controller is 48°C, the predetermined turn-off temperature of the electronic fan corresponding to the temperature of the drive motor is 82°C, the predetermined turn-off temperature of the electronic fan corresponding to the temperature of the generator controller is 48°C, and the predetermined turn-off temperature of the electronic fan corresponding to the temperature of the generator is 82°C. The electronic fan is turned off when all of the actual temperatures of the drive motor controller, the drive motor, the generator and the generator controller are lower than a corresponding predetermined turn-off temperature of the electronic fan.

In this embodiment, in a range of 50°C to 58°C for the temperature of the controller, each time the temperature of the controller is increased by 1°C, the duty cycle thereof is increased by 7.5%. The vehicle controller performs a stepless speed PWM regulation on the electronic fan through the duty cycle. In a range of 85°C to 95°C for the temperatures of the drive motor and of the generator, each time the temperature of each of the motors is increased by 1°C, the duty cycle is increased by 6%. The vehicle controller performs a stepless speed PWM regulation on the electronic fan through the duty cycle. In a range of 48°C to 50°C for the temperature of the controller and a range of 82°C to 85°C for the temperature of the drive motor, the electronic fan is operated under the minimized speed with a duty cycle of 40%. With the four temperatures, the speed of the electronic fan can be controlled under a specific duty cycle, represented by a percentage of the highest duty cycle.

In a preferred embodiment, when the cooling system for motor and controller has a reduced heat dissipation effect due to failure conditions, such as damages of the water pump or the electronic fan, or lack of coolant in view of leakage of the cooling system, the driving motor, the driving motor controller, the generator and the generator controller are controlled as follows in order to protect the drive motor, the drive motor controller, the generator and the generator controller.

A predetermined temperature for initial power restriction corresponding to the temperatures of the IGBTs of the drive motor controller and the generator controller is set as 70°C. As the temperatures of the controller IGBTs increase, the power restriction on the controller *per se* is also enhanced, and the predetermined temperature for complete power restriction is 75°C. In the meantime, a predetermined temperature for initial power restriction corresponding to the temperatures of the stator coils of the drive motor and the generator is set as 130°C. As the temperatures of the controller IGBTs increase, the power restriction on the drive motor by the drive motor controller and that on the generator by the generator controller are also enhanced, and the predetermined temperature for complete power restriction is 135°C.

Although the present invention has been described with reference to preferred embodiments, various modifications may be made by anyone skilled in the art within the scope of the present invention as defined by the appended claims.

## Claims

1. A cooling system for motor and controller, including:
a cooling package (1);
a circulation loop (2) having two ends respectively connected with a high-level port and a low-level port of the cooling package (1), the circulation loop (2) including a water pump (3) arranged in series therein, and a first branch (4) and a second branch (5) connected in parallel with each other; wherein the second branch (5) includes a drive motor (31), and
an expansion water tank (6) connecting the cooling package (1) and the circulation loop (2),
**characterized in that**:
the first branch (4) includes an integrated controller (32) and a generator (33) arranged in series, the integrated controller (32) being located before the generator (33);
the cooling package (1) includes a heat radiator (11), a shroud (12) disposed on the heat radiator (11), and an electronic fan (13) arranged in the shroud (12), the heat radiator (11) and the shroud (12) being connected with each other through a sealing assembly (14), and **in that**
the sealing assembly (14) includes a ferrule (15) arranged around an edge of the shroud (12) and an elastic boss (16) provided on the ferrule (15), the elastic boss (16) being pressed by the heat radiator (11) so that it is in a compressed state.

2. The cooling system for motor and controller according to claim 1, wherein the ferrule (15) is provided with a clamping slot (17) having a U-shaped cross section, in which a plurality of barbs (18) is provided to catch the edge of the shroud (12).

3. The cooling system for motor and controller according to claim 2, wherein upper and lower edges of the shroud (12) are respectively provided with a plurality of connecting tabs (19), each having a U-shaped hole therein, and
a bent edge (20) is provided on each side of the shroud (12), and has a width equal to a depth of the clamping slot (17).

4. The cooling system for motor and controller according to any one of claims 1 to 3, wherein the first branch (4) is provided with two butterfly handle ball valves (34), which are respectively arranged at a water inlet and a water outlet of the integrated controller (32).

5. The cooling system for motor and controller according to any one of claims 1 to 3, wherein the heat radiator (11) is provided at its top with a first exhaust valve connected to the expansion water tank (6), and a water outlet of the drive motor (31) in the second branch (5) is provided with a second exhaust valve connected to the expansion water tank (6).

6. The cooling system for motor and controller according to any one of claims 1 to 3, wherein the integrated controller (32) is integrated with a generator controller for controlling operation of the generator (33), a drive motor controller for controlling operation of the drive motor (31), and a vehicle controller for controlling the water pump (3) and the cooling package (1).

7. The cooling system for motor and controller according to claim 6, wherein a generator temperature sensor is provided adjacent to a water outlet of the generator (33) for detecting a stator coil temperature of the generator (33), a drive motor temperature sensor is provided adjacent to a water outlet of the drive motor (31) for detecting a stator coil temperature of the drive motor (31), a generator controller temperature sensor is provided adjacent to a water outlet of the generator controller for detecting an IGBT temperature of the generator controller, and a drive motor controller temperature sensor is provided adjacent to a water outlet of the drive motor controller pump for detecting an IGBT temperature of the drive motor controller, and
wherein the drive motor temperature sensor and the drive motor controller temperature sensor are connected to the drive motor controller, and the generator temperature sensor and the generator controller temperature sensor are connected to the generator controller.

8. A cooling method for motor and controller, including:
step 1 of mounting the cooling system for motor and controller according to any one of claims 1 to 7 on a vehicle; and
step 2, wherein:
several predetermined turn-on temperatures are set for the water pump (3), corresponding to the temperatures of the drive motor (31), the drive motor controller, the generator (33) and the generator controller, respectively, and when any one of actual temperatures is higher than a respective predetermined turn-on temperature of the water pump (3), the water pump (3) is turned on;
several predetermined turn-off temperatures are set for the water pump (3), corresponding to the temperatures of the drive motor (31), the drive motor controller, the generator (33) and the generator controller, respectively, and when all of the actual temperatures are lower than a respective predetermined turn-off temperature of the water pump (3), the water pump (3) is turned off;
several predetermined turn-on temperatures are set for the electronic fan (13), corresponding to the temperatures of the drive motor (31), the drive motor controller, the generator (33) and the generator controller, respectively, and when any one of the actual temperatures is higher than a respective predetermined turn-on temperature of the electronic fan (13), the electronic fan (13) is turned on; and
several predetermined turn-off temperatures are set for the electronic fan (13), corresponding to the temperatures of the drive motor (31), the drive motor controller, the generator (33) and the generator controller, respectively, and when all of the actual temperatures are lower than a respective predetermined turn-off temperature of the electronic fan (13), the electronic fan (13) is turned off.

## Patentansprüche

1. Kühlsystem für Motor und Steuerung, das Folgendes beinhaltet:
ein Kühlpaket (1);
eine Zirkulationsschleife (2), die zwei Enden aufweist, die mit einem Anschluss auf hohem Niveau beziehungsweise einem Anschluss auf niedrigem Niveau des Kühlpakets (1) verbunden sind, wobei die Zirkulationsschleife (2) eine Wasserpumpe (3) beinhaltet, die darin in Reihe angeordnet ist, und einen ersten Zweig (4) und einen zweiten Zweig (5), die miteinander parallelgeschaltet sind; wobei der zweite Zweig (5) einen Antriebsmotor (31) beinhaltet, und
ein Expansionswassergefäß (6), das das Kühlpaket (1) und die Zirkulationsschleife (2) verbindet,
**dadurch gekennzeichnet, dass**:
der erste Zweig (4) eine integrierte Steuerung (32) und einen Generator (33) beinhaltet, die in Reihe angeordnet sind, wobei sich die integrierte Steuerung (32) vor dem Generator (33) befindet;
das Kühlpaket (1) einen Wärmestrahler (11), eine an dem Wärmestrahler (11) angeordnete Ummantelung (12) und einen in der Ummantelung (12) angeordneten elektronischen Lüfter (13) beinhaltet, wobei der Wärmestrahler (11) und die Ummantelung (12) durch eine Dichtungsanordnung (14) miteinander verbunden sind, und dadurch, dass
die Dichtungsanordnung (14) eine Hülse (15), die um eine Kante der Ummantelung (12) angeordnet ist, und einen elastischen Vorsprung (16) beinhaltet, der an der Hülse (15) vorgesehen ist, wobei der elastische Vorsprung (16) von dem Wärmestrahler (11) so gedrückt wird, dass er sich in einem zusammengedrückten Zustand befindet.

2. Kühlsystem für Motor und Steuerung nach Anspruch 1, wobei die Hülse (15) mit einem Klemmschlitz (17) versehen ist, der einen U-förmigen Querschnitt aufweist, in dem eine Vielzahl von Widerhaken (18) vorgesehen sind, um die Kante der Ummantelung (12) einzufangen.

3. Kühlsystem für Motor und Steuerung nach Anspruch 2, wobei obere und untere Kanten der Ummantelung (12) jeweils mit einer Vielzahl von Verbindungslaschen (19) versehen sind, die jeweils ein U-förmiges Loch darin aufweisen, und
eine gebogene Kante (20) auf jeder Seite der Ummantelung (12) vorgesehen ist und eine Breite aufweist, die gleich einer Tiefe des Klemmschlitzes (17) ist.

4. Kühlsystem für Motor und Steuerung nach einem der Ansprüche 1 bis 3, wobei der erste Zweig (4) mit zwei Kugelventilen mit Schmetterlingsgriff (34) versehen ist, die jeweils an einem Wassereinlass und einem Wasserauslass der integrierten Steuerung (32) angeordnet sind.

5. Kühlsystem für Motor und Steuerung nach einem der Ansprüche 1 bis 3, wobei der Wärmestrahler (11) an seiner Oberseite mit einem ersten Auslassventil versehen ist, das mit dem Expansionswassergefäß (6) verbunden ist, und ein Wasserauslass des Antriebsmotors (31) im zweiten Zweig (5) mit einem zweiten Auslassventil versehen ist, das mit dem Expansionswassergefäß (6) verbunden ist.

6. Kühlsystem für Motor und Steuerung nach einem der Ansprüche 1 bis 3, wobei die integrierte Steuerung (32) mit einer Generatorsteuerung zum Steuern des Betriebs des Generators (33), einer Antriebsmotorsteuerung zum Steuern des Betriebs des Antriebsmotors (31), und einer Fahrzeugsteuerung zum Steuern der Wasserpumpe (3) und des Kühlpakets (1) integriert ist.

7. Kühlsystem für Motor und Steuerung nach Anspruch 6, wobei ein Generator-Temperatursensor angrenzend an einen Wasserauslass des Generators (33) zum Erfassen einer Statorspulentemperatur des Generators (33) vorgesehen ist, ein Antriebsmotor-Temperatursensor angrenzend an einen Wasserauslass des Antriebsmotors (31) zum Erfassen einer Statorspulentemperatur des Antriebsmotors (31) vorgesehen ist, ein Generatorsteuerungs-Temperatursensor angrenzend an einen Wasserauslass der Generatorsteuerung zum Erfassen einer IGBT-Temperatur der Generatorsteuerung vorgesehen ist, und ein Antriebsmotorsteuerungs-Temperatursensor angrenzend an einen Wasserauslass der Antriebsmotorsteuerungspumpe zum Erfassen einer IGBT-Temperatur der Antriebsmotorsteuerung vorgesehen ist, und
wobei der Antriebsmotor-Temperatursensor und der Antriebsmotorsteuerungs-Temperatursensor mit der Antriebsmotorsteuerung verbunden sind, und der Generator-Temperatursensor und der Generatorsteuerungs-Temperatursensor mit der Generatorsteuerung verbunden sind.

8. Kühlverfahren für Motor und Steuerung, das Folgendes beinhaltet:
Schritt 1 des Montierens des Kühlsystems für Motor und Steuerung nach einem der Ansprüche 1 bis 7 an einem Fahrzeug; und
Schritt 2, wobei:
mehrere vorbestimmte Einschalttemperaturen für die Wasserpumpe (3) eingestellt werden, die den Temperaturen des Antriebsmotors (31), der Antriebsmotorsteuerung, des Generators (33) bzw. der Generatorsteuerung entsprechen, und wenn eine von Ist-Temperaturen höher ist als eine jeweilige vorbestimmte Einschalttemperatur der Wasserpumpe (3), die Wasserpumpe (3) eingeschaltet wird;
mehrere vorbestimmte Abschalttemperaturen für die Wasserpumpe (3) eingestellt werden, die den Temperaturen des Antriebsmotors (31), der Antriebsmotorsteuerung, des Generators (33) bzw. der Generatorsteuerung entsprechen, und wenn alle der Ist-Temperaturen niedriger sind als eine jeweilige vorbestimmte Abschalttemperatur der Wasserpumpe (3), die Wasserpumpe (3) abgeschaltet wird;
mehrere vorbestimmte Einschalttemperaturen für den elektronischen Lüfter (13) eingestellt werden, die den Temperaturen des Antriebsmotors (31), der Antriebsmotorsteuerung, des Generators (33) bzw. der Generatorsteuerung entsprechen, und wenn eine der Ist-Temperaturen höher ist als eine jeweilige vorbestimmte Einschalttemperatur des elektronischen Lüfters (13), der elektronische Lüfter (13) eingeschaltet wird; und
mehrere vorbestimmte Abschalttemperaturen für den elektronischen Lüfter (13) eingestellt werden, die den Temperaturen des Antriebsmotors (31), der Antriebsmotorsteuerung, des Generators (33) bzw. der Generatorsteuerung entsprechen, und wenn alle der Ist-Temperaturen niedriger sind als eine jeweilige vorbestimmte Abschalttemperatur des elektronischen Lüfters (13), der elektronische Lüfter (13) abgeschaltet wird.

## Revendications

1. Système de refroidissement pour moteur et dispositif de commande, incluant :
un ensemble de refroidissement (1) ;
une boucle de circulation (2) présentant deux extrémités connectées respectivement à un orifice de haut niveau et à un orifice de bas niveau de l'ensemble de refroidissement (1), la boucle de circulation (2) incluant une pompe à eau (3) disposée en série en son sein, et une première branche (4) et une seconde branche (5) connectées en parallèle l'une avec l'autre ; dans lequel la seconde branche (5) inclut un moteur d'entraînement (31), et
un réservoir d'eau d'expansion (6) connectant l'ensemble de refroidissement (1) et la boucle de circulation (2),
**caractérisé en ce que** :
la première branche (4) inclut un dispositif de commande intégré (32) et un générateur (33) agencés en série, le dispositif de commande intégré (32) étant situé avant le générateur (33) ;
l'ensemble de refroidissement (1) inclut un radiateur thermique (11), un carénage (12) disposé sur le radiateur thermique (11) et un ventilateur électronique (13) agencé dans le carénage (12), le radiateur thermique (11) et le carénage (12) étant connectés l'un à l'autre par un ensemble d'étanchéité (14), et **en ce que**
l'ensemble d'étanchéité (14) inclut une virole (15) agencée autour d'un bord du carénage (12) et un bossage élastique (16) prévu sur la virole (15), le bossage élastique (16) étant pressé par le radiateur de chaleur (11) afin qu'il soit dans un état compressé.

2. Système de refroidissement pour moteur et dispositif de commande selon la revendication 1, dans lequel la virole (15) est pourvue d'une fente de serrage (17) présentant une section transversale en forme de U, dans laquelle une pluralité de picots (18) est prévue pour accrocher le bord du carénage (12).

3. Système de refroidissement pour moteur et dispositif de commande selon la revendication 2, dans lequel les bords supérieur et inférieur du carénage (12) sont respectivement pourvus d'une pluralité de pattes de connexion (19), chacune présentant un trou en forme de U en son sein, et
un bord plié (20) est prévu de chaque côté du carénage (12), et présente une largeur égale à une profondeur de la fente de serrage (17).

4. Système de refroidissement pour moteur et dispositif de commande selon l'une quelconque des revendications 1 à 3, dans lequel la première branche (4) est pourvue de deux vannes à boisseau sphérique à manette papillon (34), qui sont respectivement agencées à une entrée d'eau et une sortie d'eau du dispositif de commande intégré (32).

5. Système de refroidissement pour moteur et dispositif de commande selon l'une quelconque des revendications 1 à 3, dans lequel le radiateur thermique (11) est pourvu à son sommet d'une première soupape d'échappement connectée au réservoir d'eau d'expansion (6), et une sortie d'eau du moteur d'entraînement (31) dans la seconde branche (5) est pourvue d'une seconde soupape d'échappement connectée au réservoir d'eau d'expansion (6).

6. Système de refroidissement pour moteur et dispositif de commande selon l'une quelconque des revendications 1 à 3, dans lequel le dispositif de commande intégré (32) est intégré à un dispositif de commande de générateur pour commander le fonctionnement du générateur (33), un dispositif de commande de moteur d'entraînement pour commander le fonctionnement du moteur d'entraînement (31), et un dispositif de commande de véhicule pour commander la pompe à eau (3) et l'ensemble de refroidissement (1).

7. Système de refroidissement pour moteur et dispositif de commande selon la revendication 6, dans lequel un capteur de température de générateur est prévu adjacent à une sortie d'eau du générateur (33) pour détecter une température de bobine de stator du générateur (33), un capteur de température de moteur d'entraînement est prévu adjacent à une sortie d'eau du moteur d'entraînement (31) pour détecter une température de bobine de stator du moteur d'entraînement (31), un capteur de température de dispositif de commande de générateur est disposé adjacent à une sortie d'eau du dispositif de commande de générateur pour détecter une température IGBT du dispositif de commande de générateur, et un capteur de température de dispositif de commande de moteur d'entraînement est prévu adjacent à une sortie d'eau de la pompe de dispositif de commande de moteur d'entraînement pour détecter une température IGBT du dispositif de commande de moteur d'entraînement, et
dans lequel le capteur de température de moteur d'entraînement et le capteur de température de dispositif de commande de moteur d'entraînement sont connectés au dispositif de commande de moteur d'entraînement, et le capteur de température de générateur et le capteur de température de dispositif de commande de générateur sont connectés au dispositif de commande de générateur.

8. Procédé de refroidissement pour moteur et dispositif de commande, incluant :
une étape 1 de montage du système de refroidissement pour moteur et dispositif de commande selon l'une quelconque des revendications 1 à 7 sur un véhicule ; et
une étape 2, dans laquelle :
plusieurs températures de mise en marche prédéterminées sont réglées pour la pompe à eau (3), correspondant aux températures du moteur d'entraînement (31), du dispositif de commande de moteur d'entraînement, du générateur (33) et du dispositif de commande de générateur, respectivement, et lorsqu'une quelconque parmi les températures réelles est supérieure à une température de mise en marche prédéterminée respective de la pompe à eau (3), la pompe à eau (3) est mise en marche ;
plusieurs températures d'arrêt prédéterminées sont réglées pour la pompe à eau (3), correspondant aux températures du moteur d'entraînement (31), du dispositif de commande de moteur d'entraînement, du générateur (33) et du dispositif de commande de générateur, respectivement, et lorsque toutes les températures réelles sont inférieures à une température d'arrêt prédéterminée respective de la pompe à eau (3), la pompe à eau (3) est arrêtée ;
plusieurs températures de mise en marche prédéterminées sont réglées pour le ventilateur électronique (13), correspondant aux températures du moteur d'entraînement (31), du dispositif de commande de moteur d'entraînement, du générateur (33) et du dispositif de commande de générateur, respectivement, et lorsqu'une quelconque parmi les températures réelles est supérieure à une température de mise en marche prédéterminée respective du ventilateur électronique (13), le ventilateur électronique (13) est mis en marche ; et
plusieurs températures d'arrêt prédéterminées sont réglées pour le ventilateur électronique (13), correspondant aux températures du moteur d'entraînement (31), du dispositif de commande de moteur d'entraînement, du générateur (33) et du dispositif de commande de générateur, respectivement, et lorsque toutes les températures réelles sont inférieures à une température d'arrêt prédéterminée respective du ventilateur électronique (13), le ventilateur électronique (13) est arrêté.
